# EUROPEAN PATENT APPLICATION

(11) **EP 2 436 937 A1**
(43) Date of publication of application: **04.04.2012**
(21) Application number: 10185393.5
(22) Date of filing: 01.10.2010
(51) Int. Cl.: F16B 31/02

(54) **Bolt tension controller**

(71) Applicant: Enerfast Ltd, Bath, Avon BA1 6BL (GB)
(72) Inventor: Hirst, John Andrew Brian, Atworth, Wiltshire SN12 8LB (GB)
(74) Representative: Bardo, Julian Eason

(57) **Abstract**

A screwed fastener includes a metal shell (1) fitted underneath a head (2) or nut of the fastener, the shell (1) being designed to compress when the fastener is loaded, the compression being elastic. The amount of compression is measured at diametrically opposite faces (5).

## Description

### Technical Field

The invention relates to a mechanism fitted under the nut of a screwed fastener in order to help retain the load in the fastener, under the effect of external influences, and also for indicating the tension in the fastener. It can therefore provide a method of both knowing the load and preserving it in the fastener and the joint itself, and these are key factors in preventing leakage or even total mechanical failure in a critical joint.

### Background of the Invention

Joints held together with screwed fasteners often leak or fail because the load in them is incorrect, or if originally correct, the load has decayed due to a variety of factors eg embedment of the joint surfaces. This is especially so on pipeline and petro-chemical joints where gaskets are used and leaks occur if the tension in the fastener falls or is incorrect.

Essentially an embodiment of this invention places a compressible spring element beneath the face of the nut so increasing the stored energy in the joint. The effect of any load losses due to embedment are then a reduced percentage of the overall clamping load so leading to a reduced loss of tension and therefore less likelihood of a leak or failure occurring.

Energy storage devices fitted beneath the nut are well known. Prior art generally attempts to store energy by fitting conical washers otherwise known as disc springs or Belleville washers under the nut. Whereas these devices can indeed store energy they have a very high hysteresis due to friction on their upper and lower surfaces and can not therefore return all of their stored energy back into the bolt when it is required, particularly when corrosion prevents the disc from sliding laterally on the joint or one to another disc. They cannot therefore compensate effectively for any load loss. It is also very difficult to deduce from the compression of the disc the load in it due to practical difficulties of measuring a cone.

### Summary of the Invention

An embodiment of this invention in its simplest form described here has a single spherical elastic metal shell though it is accepted that other shapes than spherical are possible.

The basic shell may have several forms ranging from a simplest form which provides a means of preserving the fastener load only to other forms incorporating various methods of not only preserving the load but also measuring it, even at varying temperatures.

According to a first aspect of the invention there is provided a screwed fastener including a metal shell fitted underneath a head or nut of the fastener, the shell being designed to compress when the fastener is loaded, the compression being elastic. Because the compression is elastic there is virtually no loss of energy as the shell is compressed, even if it goes through a number of cycles of compression and expansion.

As already indicated, the shell may be in various shapes but an especially preferred shape is an approximately spherical shape.

In an especially preferred embodiment of the invention, the compression of the shell is measured. To facilitate that measurement, portions of the shell preferably have machined faces, the machined faces may be on portions of the shell that are diametrically opposite. "Diametrically opposite" refers to opposite sides of the longitudinal axis of the screwed fastener and references to "diameter" and similar terms should be understood accordingly.

In a preferred embodiment of the invention, diametrically opposite portions of the shell have projecting portions whose outwardly projecting faces provide faces to enable an accurate measurement of the separation of the faces. Those outwardly projecting faces may be machined faces. The projecting portions may be of cylindrical or hemispherical shape; such shapes can readily provide outwardly projecting faces whose separation can be measured readily. The projecting portions may be integral with or formed separately from the shell.

In an especially preferred embodiment of the invention, the measurements made include a temperature measurement so that the effect of temperature on the dimensions being measured can be taken into account. Accordingly, the fastener preferably includes a sensor for measuring the temperature of the fastener. The sensor may be arranged to measure the temperature of any part of the fastener but it will often be most convenient if the sensor is arranged to measure the temperature of the shell. The temperature sensor may be a thermocouple.

In another embodiment of the invention a mechanical arrangement provides an indication of the load on the fastener and whether the load is above or below a predetermined level. In a particular example of the invention, a rotatable member changes between a state in which it is held against rotation and a state in which it is free to rotate at the predetermined load. Whilst it is possible to arrange for the rotatable member to be free to rotate at loads above the predetermined load and held against rotation at loads below the predetermined load, the preferred arrangement is that the rotatable member is held against rotation when the predetermined load is exceeded and is free to rotate at loads below the predetermined load. Where reference is made in this specification to "loads" on the fastener, it should be understood that these are the loads applied to the fastener as a result of its operation in use as a fastener; in a case where the fastener is a nut and bolt with a bolt head, the shaft of the bolt will bear a tension load substantially equal to the compression load applied to the shell.

According to a second aspect of the invention, there is provided a method of using a fastener as defined above, in which the load on the fastener is measured by measuring a dimension of the shell, the amount of increase in the dimension indicating the load. Conveniently, the dimension that is measured will be a diameter of the shell (diameter in the sense that it is a dimension extending from one side of the axis of the fastener to the other, but not applying exclusively to cases where the shell is of circular section).

If it is desired to compensate for temperature, then the temperature of the fastener may be measured. The measurement of the dimension of the shell may then be adjusted to allow for the temperature of the fastener before calculation is made of the load on the fastener.

It will be appreciated that the apparatus and the method of the invention as described herein are closely related and that therefore essential and preferred features of one of them may, unless indicated otherwise or clearly inappropriate, be incorporated into the other. Any aspect of the method of the invention may use any form of fastener of the invention. Similarly, a fastener of the invention may be so configured as to be suitable for use in a method according to any form of the invention. Features described above in respect of the apparatus of the invention may be incorporated into the method of the invention and vice versa.

### Brief Description of the Drawings

By way of example embodiments of the invention will now be described with reference to the accompanying schematic drawings, of which:
Fig. 1 is a section and plan view of a first type of fastener;
Fig. 2 is a section and plan view of a second type of fastener; and
Fig. 3 is a section and plan view of a third type of fastener.

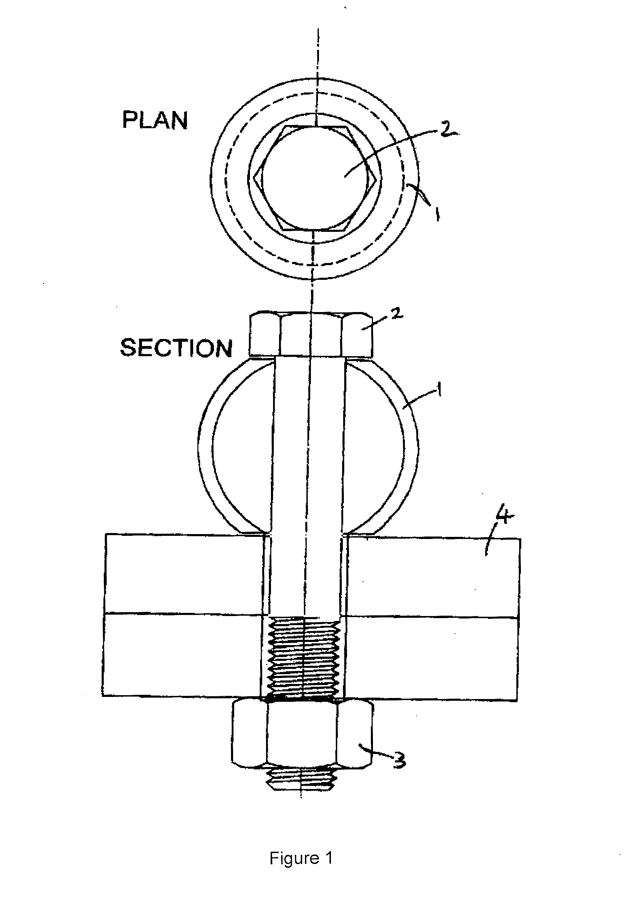

The simplest type of fastener is the first type and is shown in Fig 1. This shows a spherical shell (1) placed beneath the head of a bolt (2) although it could as well fit underneath the nut (3). When the bolt is tightened the bolt is stretched and the shell is compressed. The shell is designed to compress elastically up to any required load required in the bolt. It therefore can spring back and thereby reduce any loss of load caused by embedment in any surfaces of the joint (4) or if a gasket is present any plastic compression of the gasket. This type is acting as an energy store only.

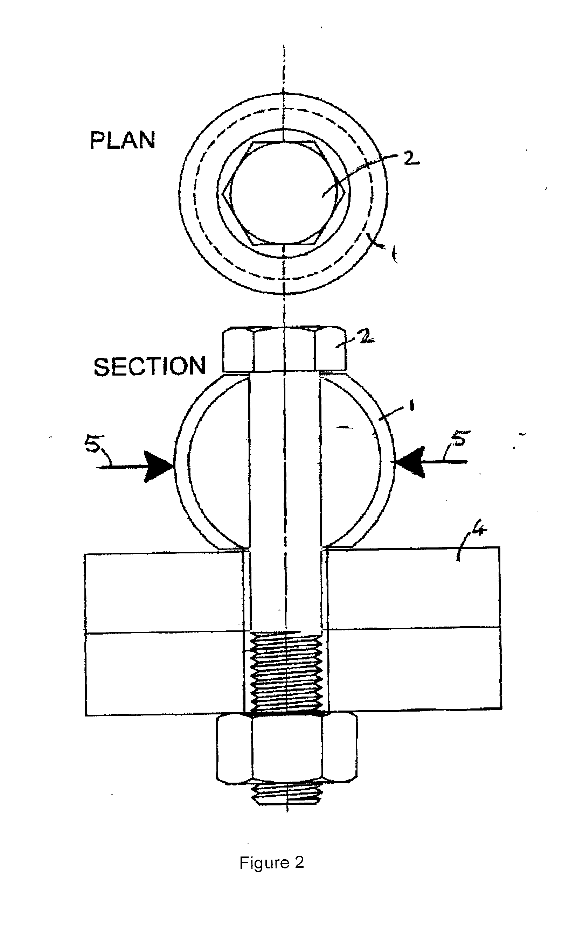

Type 2 is exactly the same as type 1 in appearance but it has the addition of a very accurately machined (5) outside diameter see Fig 2. This accurately machined diameter provides an original reference diameter for when the unit is compressed when fitted to a bolt. The increase in size of this reference diameter provides a measure of the amount of load pressing on it and therefore the load in the bolt. The amount of increase in diameter can be tied to the load to create the change by referring to data previously gained from carrying out compression tests in a laboratory using reference compression loads. The data for compression may also be derived in the laboratory for the unit at raised temperatures typically up to 550 deg C. Knowing the operating temperature of the unit then the load in the bolt can be derived by looking at data obtained at that temperature. Hence loads in bolts can be found for a range of temperatures provided the reference diameter at various temperatures simply by measuring the reference diameter on the shell. The operating temperature of the shell (1) is measured by a thermocouple (not shown).

The diameter may in practice be easily measured by a commercial spring loaded calliper device or laser measuring device.

A further means of measuring the diameter is by wrapping a ring or wire around the diameter and measuring the variation in the gap between the two ends of the ring or wire.

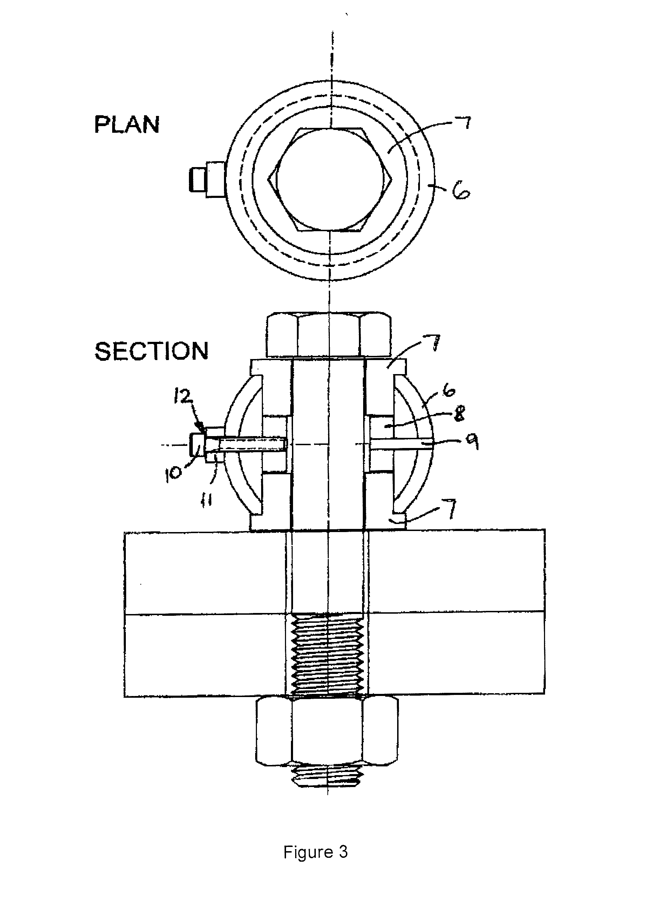

Type 3 uses a similar shell (6) as the earlier variations as shown in Fig 3. However in this case there is provided two shoulder abutments (7) which captures the shell between them and transmits the force from the bolt onto the shell. In order to measure the change in the diameter of the shell under load in this case there is provided an annular ring (8) fixed to one side of the shell by a metal rod (9). At the other side of the shell there is an a headed pin (10) with a circular metal disc (11) fitted under the head of the pin and the pin projects though the shell and is locked into the annular ring. The disc is free to turn an accurately pre-set gap (12). This gap is set to a value such that when the bolt load reaches a required value it will have caused the shell diameter to have expanded enough to grip and lock the disc. The locking of this disc therefore provides a measure of the load in the shell and bolt. The operator will therefore simple tighten the bolt until the disc locks to achieve the correct load and any later slackening of this disc will indicate that some load has been lost. It may be noted that it will be possible to provide more than one of these indicator arrangements around the circumference of the shell so providing a variety of possible load controls.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A screwed fastener including a metal shell fitted underneath a head or nut of the fastener, the shell being designed to compress when the fastener is loaded, the compression being elastic.

2. A fastener according to claim 1, in which the shell is of approximately spherical shape.

3. A fastener according to claim 1 or 2, in which diametrically opposite portions of the shell have machined faces to enable an accurate measurement of the separation of the faces.

4. A fastener according to any preceding claim, in which diametrically opposite portions of the shell have projecting portions whose outwardly projecting faces provide faces to enable an accurate measurement of the separation of the faces.

5. A fastener according to any preceding claim, further including a sensor for measuring the temperature of the fastener.

6. A fastener according to claim 5, in which the sensor is arranged to measure the temperature of the shell.

7. A fastener according to claim 5 or 6, in which the sensor is a thermocouple.

8. A fastener according to any preceding claim, in which at a predetermined load on the fastener, a rotatable member changes between a state in which it is held against rotation and a state in which it is free to rotate.

9. A method of using a fastener according to any preceding claim, in which the load on the fastener is measured by measuring a dimension of the shell, the amount of increase in the dimension indicating the load.

10. A method according to claim 9, in which the temperature of the fastener is measured.
